# EUROPÄISCHE PATENTANMELDUNG

(11) **EP 4 458 595 A1**
(43) Veröffentlichungstag der Anmeldung: **06.11.2024**
(21) Anmeldenummer: 23171194.6
(22) Anmeldetag: 02.05.2023
(51) Int. Cl.: B60J 7/16

(54) **FREIZEITFAHRZEUG MIT EINER DACHSCHALE**

(71) Anmelder: Dethleffs GmbH & Co. KG, 88316 Isny im Allgäu (DE); Klaus Kunststofftechnik GmbH, 88319 Aitrach (DE)
(72) Erfinder: Plischke, Erik, 87547 Missen-Willhams (DE); Schuster, Thomas, 88138 Hergenweiler (DE); Mösle, Norbert, 87763 Lautrach (DE); Sauter, Roland, 88319 Aitrach (DE)
(74) Vertreter: Müller Schupfner & Partner Patent- und Rechtsanwaltspartnerschaft mbB (Muc)

(57) **Zusammenfassung**

Eine Dachschale (2), die vorzugsweise als verstellbare Dachschale (2) ausgebildet ist, dient für Freizeitfahrzeuge (1), insbesondere für Wohnmobile oder Wohnwagen. Die Dachschale (2) weist eine Außenschale (4), eine Innenschale (5) und einen Schaumkern (15) auf. Hierbei ist die Außenschale (4) aus einem tiefgezogenen Thermoplasten gebildet. Ferner ist ein Freizeitfahrzeug (1) mit solch einer Dachschale (2) angegeben.

## Beschreibung

Die Erfindung betrifft ein Freizeitfahrzeug mit einer Dachschale, insbesondere einer verstellbaren Dachschale. Insbesondere betrifft die Erfindung das Gebiet der Freizeitfahrzeuge, die als Wohnmobil oder Wohnwagen ausgestaltet sind.

Aus der DE 10 2021 103 413 A1 ist ein Campingfahrzeug mit einem Fahrzeugdach bekannt. Hierbei ist es bekannt, dass Fahrzeugdächer, beispielsweise Schlafdächer, Aufstelldächer, Hubdächer, Schiebedächer oder Hochdächer, in einer SandwichBauweise realisiert sind. Ferner ist es hierbei bekannt, dass häufig verwendete Materialien, unter anderem Aluminium, expandiertes Polystyrol (EPS), extrudiertes Polystyrol (XPS), Polyurethan (PU), Holz oder glasfaserverstärkter Kunststoff (GFK) sind.

Bei einer Dachschale, die aus einem verpressten Aluminiumblech mit entsprechend angeschweißten Knotenblechen zur Versteifung gefertigt ist, ergeben sich insbesondere sehr hohe Werkzeugkosten für die Presse. Handlaminierte Dachschalen aus glasfaserverstärktem Kunststoff, die im Vakuumexpansionsverfahren hergestellt werden, haben hohe Herstellungskosten und ein hohes Gewicht. Außerdem kann die Dachstruktur teilweise instabil und schwer nachzubearbeiten sein. Außerdem besteht bei glasfaserverstärktem Kunststoff keine Recyclingfähigkeit, da dieser Sondermüll dargestellt. Des Weiteren ergeben sich hohe Werkzeugkosten. Ferner ist die Konstruktion unflexibel und somit in der Regel nicht auf andere Fahrzeugtypen anpassbar. Sowohl Aluminium als auch glasfaserverstärkte Kunststoffe haben bei der Fertigung der Dachschale die Nachteile, dass diese bei der Nachbearbeitung nur wenig flexibel sind und die realisierten Aufbauten schwer sind.

Aufgabe der Erfindung ist es, eine Dachschale für ein Freizeitfahrzeug, insbesondere für ein Wohnmobil oder einen Wohnwagen, und ein Freizeitfahrzeug mit einer Dachschale anzugeben, die verbessert ausgestaltet sind.

Die Aufgabe wird durch eine Dachschale mit den Merkmalen des unabhängigen Patentanspruchs 1 und durch ein Freizeitfahrzeug mit den Merkmalen des Patentanspruchs 10 gelöst. Vorteilhafte Weiterbildung der Erfindung sind in den Unteransprüchen angegeben.

Die Aufgabe wird durch eine Dachschale, insbesondere eine verstellbare Dachschale, für Freizeitfahrzeuge, insbesondere für Wohnmobile oder Wohnwagen, mit einer Außenschale und zumindest einem Schaumkern gelöst, wobei die Außenschale zumindest teilweise aus zumindest einem Thermoplasten gebildet ist.

Ferner wird die Aufgabe durch ein Freizeitfahrzeug, insbesondere einen Wohnwagen oder ein Wohnmobil mit zumindest einer solchen Außenschale gelöst.

In vorteilhafter Weise kann die Außenschale zumindest im Wesentlichen aus zumindest einem Thermoplasten gebildet sein. Unter einem Thermoplasten ist auch ein thermoplastischer Terpolymer zu verstehen. Hierdurch kann eine Gewichtseinsparung ermöglicht werden. Ferner können ein Herstellungsaufwand reduziert und eine Nachbearbeitung ermöglicht werden.

Vorteilhaft ist es, dass die Außenschale zumindest teilweise aus einem Polycarbonat (PC) und/oder zumindest teilweise aus einem thermoplastischen Terpolymer, insbesondere einem ABS-Kunststoff, und/oder zumindest teilweise aus einem PMMA gebildet ist. Unter einem ABS-Kunststoff wird ein Kunststoff auf der Basis von einem Acrylnitril-Butadien-Styrol-Copolymer (ABS) verstanden. Unter einem PMMA wird ein Polymethylmethacrylat verstanden. Vorzugsweise ist die Außenschale zumindest im Wesentlichen aus einem solchen Thermoplasten gebildet. Hierdurch ist eine vorteilhafte Herstellbarkeit der Dachschale in Sandwichbauweise möglich.

In vorteilhafter Weise ist der Schaumkern zumindest im Wesentlichen aus einem extrudierten Polystyrol (XPS) gebildet. Durch die Ausgestaltung der Außenschale und des Schaumkerns sowie einer Innenschale kann insbesondere eine vorteilhafte Anpassung des Sandwichaufbaus im Hinblick auf die thermischen und statischen Anforderungen erfolgen.

Vorteilhaft ist es auch, dass eine mit der Außenschale verbundene Innenschale vorgesehen ist und dass der Schaumkern einen zwischen der Außenschale und der Innenschale gebildeten Zwischenraum zumindest im Wesentlichen ausfüllt. Insbesondere thermische Anforderungen können hierbei erfüllt werden, wobei eine Leichtbauweise ermöglicht wird.

Vorteilhaft ist es ferner in diesem Zusammenhang auch, dass die Außenschale und die Innenschale zumindest einen Randvorsprung bilden und dass die Außenschale und die Innenschale an dem Randvorsprung zumindest im Wesentlichen aneinander anliegen und flächig miteinander verklebt sind. Hierdurch kann eine großflächige Verklebung erfolgen, so dass eine hohe Stabilität bei reduziertem Herstellungsaufwand erzielbar ist. Ferner können zusätzliche Befestigungsmittel eingespart werden.

Vorteilhaft ist es in diesem Zusammenhang auch, dass die Innenschale zumindest teilweise aus zumindest einem ABS-Kunststoff gebildet ist. Insbesondere kann auf diese Weise eine Recyclingfähigkeit sowohl für die Außenschale als auch für die Innenschale erzielt werden. Ferner kann eine Leichtbauweise ermöglicht werden. Des Weiteren können Werkzeugkosten in einem überschaubauen Rahmen realisiert werden. Des Weiteren kann die Dachschale dadurch flexibel und anpassungsfähig für weitere Fahrzeugtypen konstruiert werden. Außerdem kann die Konstruktion der Dachschale so erfolgen, dass diese bereits eine hohe Eigensteifigkeit aufweist. Somit ist es insbesondere besonders vorteilhaft, dass die Außenschale, der Schaumkern und die Innenschale aus sehr leichten Materialien ausgebildet werden können.

Ferner kann an der Innenschale zumindest eine Sicke ausgestaltet sein. Diese vorteilhafte Ausgestaltung hat den Vorteil, dass eine zusätzliche Aussteifung möglich ist. Dies macht umgekehrt eine noch leichtere Ausgestaltung beziehungsweise einen sparsameren Materialeinsatz möglich.

Außerdem ist es vorteilhaft, dass die Außenschale zumindest teilweise aus zumindest einem tiefgezogenen Thermoplasten gebildet ist. Vorzugsweise ist der Thermoplast hierbei vor dem Tiefziehen mit zumindest einer Außenfarbe eingefärbt. Hier kann insbesondere eine koextrudierte Außenschale realisiert werden. Wenn diese bereits vor dem Tiefzug mit der gewünschten Außenfarbe eingefärbt ist, dann ergibt sich eine reduzierte Anfälligkeit gegenüber Kratzern oder dergleichen. Je nach Ausgestaltung kann aber auch eine Lackierung der Außenschale vorgesehen sein. In entsprechender Weise kann auch eine Ausgestaltung der Innenschale erfolgen, falls dies entsprechend der Materialwahl möglich und im entsprechenden Anwendungsfall zweckmäßig ist.

Ferner können geeignete Erweiterungen der Dachschale vorgenommen werden. Insbesondere kann durch die Materialwahl eine besonders gute Nachbearbeitungsfähigkeit realisiert werden, so dass weitere Elemente montiert beziehungsweise angebracht werden können. Insbesondere kann eine Photovoltaik realisiert werden. Außerdem kann ein beheizter Innenhimmel an der Dachschale realisiert werden. Ferner können an der Dachschale ein oder mehrere Panoramafenster ausgestaltet werden.

Weitere Vorteile und Einzelheiten der Erfindung werden anhand der in den schematischen Figuren dargestellten Ausführungsbeispielen näher erläutert.

Hierbei zeigen:
- Fig. 1: Ein Freizeitfahrzeug mit einer Dachschale entsprechend einem Ausführungsbeispiel in einer auszugsweisen, schematischen Darstellung, wobei eine Ansicht von der Seite dargestellt ist; und
- Fig. 2: eine auszugsweise, schematische Darstellung des Freizeitfahrzeugs mit der Dachschale in einer schematischen Schnittdarstellung.

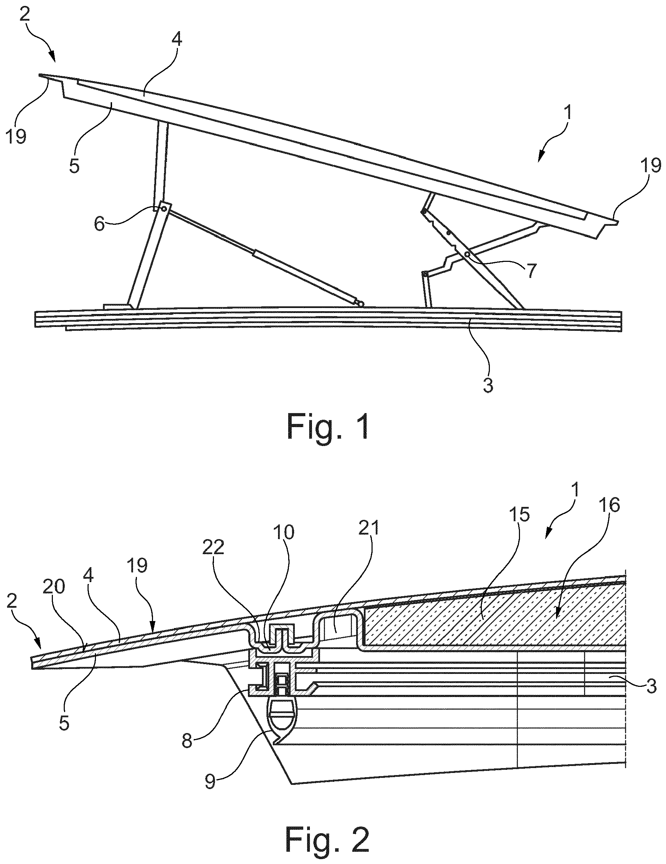

Fig. 1 zeigt ein Freizeitfahrzeug 1 mit einer Dachschale 2 in einer auszugsweisen, schematischen Darstellung entsprechend einem Ausführungsbeispiel der Erfindung. Hierbei ist die Dachschale 2 insgesamt dargestellt, während ein Dach 3 des Freizeitfahrzeugs 1 nur auszugsweise von der Seite gezeigt ist. Das Freizeitfahrzeug 1 kann insbesondere als Wohnmobil oder Wohnwagen ausgestaltet sein. Die Dachschale 2 eignet sich insbesondere für solche Freizeitfahrzeuge 1.

Die Dachschale 2 weist eine Außenschale 4 und eine Innenschale 5 auf. Die Dachschale 2 ist über eine aktive Aufstellkinematik 6 und eine passive Aufstellkinematik 7 mit dem Dach 3 des Freizeitfahrzeugs verbunden.

Im Folgenden wird die Ausgestaltung der Dachschale 2 auch unter Bezugnahme auf die Fig. 2 beschrieben.

Fig. 2 zeigt die in Fig. 1 dargestellte Dachschale 2 in einer auszugsweisen, schematischen Schnittdarstellung, wobei ein Ausschnitt im vorderen Bereich des Fahrzeugs gezeigt ist. Ferner sind ein Profil 8 und eine Hauptdichtung 9 des Freizeitfahrzeugs 1 dargestellt, wobei sich die Dachschale 2 im geschlossenen Zustand an einer Auflagefläche 10 des Profils 8 abstützt.

Die Dachschale 2 weist einen Schaumkern 15 auf. Zwischen der Außenschale 4 und der Innenschale 5 ist ein Zwischenraum 16 gebildet. Der Schaumkern 15 füllt den Zwischenraum 16 zumindest im Wesentlichen auf. Die Außenschale 4 und die Innenschale 5 bilden einen Randvorsprung 19 aus, der umlaufend an der Dachschale 2 ausgestaltet ist. Bei einer abgewandelten Ausgestaltung können auch mehrere Randvorsprünge vorgesehen sein. An dem Randvorsprung 19 liegen die Außenschale 4 und die Innenschale 5 aneinander an, was an einer Anlagefläche 20 erfolgt. An der Anlagefläche 20 erfolgt eine großflächige Verklebung der Außenschale 4 mit der Innenschale 5. Bei der Montage kann die Innenschale 5 bereits die finalen Auflagen und die Klebeflächen aufweisen.

Ferner weist die Innenschale 5 wenigstens eine Dicke 21 auf, um die Struktur zusätzlich auszusteifen. Prinzipiell kann auch die Außenschale 4 wenigstens eine Sicke aufweisen. Ein oder mehrere sickenförmige Ausprägungen 22 sind außerdem an der Innenschale 5 ausgestaltet, um die Auflage an dem Profil 8 zu ermöglichen. Die Außenschale 4 kann aus PC und/oder einem ABS-Kunststoff und/oder aus einem PMMA koextrudiert sein. Vorzugsweise weist die Außenschale 4 bereits vor dem Tiefzug die fertige Außenfarbe auf. Hierbei wird der gewählte Thermoplast vor dem Tiefziehen eingefärbt.

Die Innenschale 5 wird vorzugsweise aus einem ABS-Kunststoff durch vorzugsweise Tiefziehen hergestellt. Der Schaumkern 15 ist vorzugsweise als XPS-Schaumkern ausgeführt. Der Schaumkern 15 kann hierdurch zur Dämmung und zusätzlichen Aussteifung der Schalen 4, 5 dienen. Die als Sandwichschale realisierte Dachschale 2 kann dadurch im Hinblick auf die thermischen und statischen Anforderungen durch die Auswahl der zum Einsatz kommenden Materialen und der konstruktiven Ausgestaltung angepasst werden.

Die Erfindung ist nicht auf die beschriebenen Ausführungsformen beschränkt.

## Patentansprüche

1. Dachschale (2), insbesondere verstellbare Dachschale (2), für Freizeitfahrzeuge (1), insbesondere für Wohnmobile oder Wohnwagen, mit einer Außenschale (4) und zumindest einem Schaumkern (15),
**dadurch gekennzeichnet,**
**dass** die Außenschale (4) zumindest teilweise aus einem Thermoplasten gebildet ist.

2. Dachschale nach Anspruch 1,
**dadurch gekennzeichnet,**
**dass** die Außenschale (4) zumindest im Wesentlichen aus zumindest einem Thermoplasten gebildet ist.

3. Dachschale nach Anspruch 1 oder 2,
**dadurch gekennzeichnet,**
**dass** die Außenschale (4) zumindest teilweise aus einem Polycarbonat und/oder zumindest teilweise aus einem thermoplastischen Terpolymer, insbesondere einem Acrylnitril-Butadien-Styrol-Copolymer-Kunststoff und/oder zumindest teilweise aus einem Polymethylmethacrylat gebildet ist.

4. Dachschale nach einem der Ansprüche 1 bis 3,
**dadurch gekennzeichnet,**
**dass** der Schaumkern (15) zumindest im Wesentlichen aus einem extrudierten Polystyrol gebildet ist.

5. Dachschale nach einem der Ansprüche 1 bis 4,
**dadurch gekennzeichnet,**
**dass** eine mit der Außenschale (4) verbundene Innenschale (5) vorgesehen ist und dass der Schaumkern (15) einen zwischen der Außenschale (4) und der Innenschale (5) gebildeten Zwischenraum (16) zumindest im Wesentlichen ausfüllt.

6. Dachschale nach Anspruch 5,
**dadurch gekennzeichnet,**
**dass** die Außenschale (4) und die Innenschale (5) zumindest einen Randvorsprung (19) ausbilden und dass die Außenschale (4) und die Innenschale (5) an dem Randvorsprung (19) zumindest im Wesentlichen aneinander anliegen und flächig miteinander verklebt sind.

7. Dachschale nach Anspruch 5 oder 6,
**dadurch gekennzeichnet,**
**dass** die Innenschale (5) aus zumindest einem Acrylnitril-Butadien-Styrol-Copolymer-Kunststoff gebildet ist.

8. Dachschale nach einem der Ansprüche 1 bis 7,.
**dadurch gekennzeichnet,**
**dass** an der Innenschale (5) zumindest eine Sicke (21) ausgestaltet ist.

9. Dachschale nach einem der Ansprüche 1 bis 8,
**dadurch gekennzeichnet,**
**dass** die Außenschale (4) zumindest teilweise aus zumindest einem tiefgezogenen Thermoplasten gebildet ist, wobei der Thermoplast vorzugsweise vor dem Tiefziehen mit zumindest einer Außenfarbe eingefärbt ist.

10. Freizeitfahrzeug (1), insbesondere Wohnwagen oder Wohnmobil, mit zumindest einer Dachschale (2) nach einem der Ansprüche 1 bis 9.
